# FASCICULE DE BREVET EUROPEEN

(11) **EP 1 757 474 B1**
(45) Date de publication et mention de la délivrance du brevet: **03.03.2010**
(21) Numéro de dépôt: 06300880.9
(22) Date de dépôt: 16.08.2006
(51) Int. Cl.: B60G 21/05, B60G 21/055

(54) **Essieu-arrière de véhicule automobile à traverse déformable**
Verbundlenkerachse
Twist beam suspension

(30) Priorité: 26.08.2005 FR 0508778
(43) Date de publication de la demande: 28.02.2007
(73) Titulaire: RENAULT S.A.S., 92100 Boulogne Billancourt (FR)
(72) Inventeur: Lavilluniere, Vincent, 95220 Herblay (FR)
(74) Mandataire: Guyon, Rodolphe C.

(56) Documents cités:
- EP-A- 0 298 929
- PATENT ABSTRACTS OF JAPAN vol. 2000, no. 19, 5 juin 2001 (2001-06-05) & JP 2001 039134 A (DAIHATSU MOTOR CO LTD), 13 février 2001 (2001-02-13)

## Description

La présente invention concerne un essieu-arrière de véhicule automobile du type comprenant une traverse portant à chacune de ses extrémités un bras rigide destiné à être lié au châssis du véhicule, les deux bras formant avec la traverse une structure en H, la traverse étant déformable en torsion.

Les essieu-arrières de ce type comportent une barre anti-roulis s'étendant près de la traverse dans le sens de sa longueur, chacune des extrémités opposées de cette barre anti-roulis étant fixée à une extrémité de la traverse.

La raideur anti-roulis de l'essieu est exclusivement obtenue par la raideur de torsion de la traverse, et de la barre anti-roulis soudée au plus près de la traverse (le plus souvent à l'intérieur) pour être le plus coaxiale possible, avec l'axe théorique de torsion de l'essieu. Ainsi, cette barre anti-roulis ne peut pas être implantée n'importe où.

Par ailleurs, les raideurs anti-roulis des deux pièces (traverse et barre) sont limitées par leur résistance mécanique. Ces deux pièces étant très proches l'une de l'autre, les efforts subis par les deux bras de l'essieu sont très localisés et les limites mécaniques sont atteintes très rapidement.

Si on veut augmenter la raideur anti-roulis de l'essieu, pour une topologie donnée, il faut augmenter le diamètre de la barre anti-roulis. Cependant plusieurs limites existent :
1. le rapprochement de la barre vers la traverse pose des problèmes pour souder ces deux pièces sur le bras
2. plus la barre est grosse, et plus le cordon de soudure assurant sa liaison sur le bras sera contraint
3. plus la barre est grosse, et plus les contraintes de cette dernière seront élevées (à même angle de torsion)
4. plus la barre est grosse, et plus elle interfère avec les épures de l'essieu en devers car il n'y a jamais coaxialité entre l'axe théorique de torsion de l'essieu.

Le document Japonnais JP 2001 039 134 A décrit un essieu en H muni d'une barre anti-roulis fixée sur le chassis.

Le but de la présente invention est de créer un essieu-arrière du type décrit ci-dessus présentant une raideur anti-roulis augmentée, malgré les contraintes et limites expliquées plus haut.

Suivant l'invention, cet essieu-arrière est caractérisé en ce qu'il comporte une barre anti-roulis comprenant une partie rectiligne s'étendant parallèlement à la traverse et dont les extrémités sont reliées chacune à une partie pliée de façon sensiblement perpendiculaire à ladite partie rectiligne, l'extrémité libre de chaque partie pliée étant reliée à l'un desdits bras rigides, chacune des extrémités de ladite partie rectiligne de la barre étant en outre reliée à l'un desdits bras rigides par une biellette dont l'extrémité opposée à la barre est reliée de façon articulée audit bras rigide.

L'invention consiste ainsi en l'adjonction d'une barre anti-roulis entièrement embarquée sur l'essieu via des liaisons cinématiques. Cette barre n'étant pas encastrée sur l'essieu, est de ce fait cinématiquement neutre. Elle ne modifie pas les épures de l'essieu.

La topologie retenue selon l'invention est constituée de deux biellettes reliant la barre à l'essieu. L'immobilisation finale de la barre par rapport à l'essieu est réalisée via une liaison rotule à une extrémité et une liaison linéaire annulaire à l'autre. Chacune des deux biellettes comporte une liaison rotule à une extrémité et une liaison cardan à l'autre. Ce système est isostatique ; il n'apporte ni ne retire de degrés de liberté au système de l'essieu.

L'une des conséquences de la neutralité du système sur les épures de l'essieu est une grande latitude de positionnement de la barre sur l'essieu. Cela facilite l'architecture globale d'un essieu H arrière. Le système présente une plus grande flexibilité de mise au point par simple démontage de la barre.

Selon une version préférée de l'invention, la biellette est reliée audit bras rigide par une rotule et est reliée à la barre par une liaison annulaire.

Selon une particularité avantageuse de l'invention, chacune des extrémités de la barre est reliée à l'un des bras rigides par une liaison annulaire.

De telles liaisons annulaires peuvent comprendre une bague entourant annulairement ladite barre, un manchon en élastomère étant compris entre la bague et la barre.

D'autres particularités et avantages de l'invention apparaîtront encore tout au long de la description ci-après.

Aux dessins annexés, donnés à titre d'exemples, non limitatifs :
- la figure 1 est une vue en perspective partielle d'un essieu-arrière ayant une structure en H connue, comportant une barre anti-roulis,
- la figure 2 est une vue en perspective d'un essieu-arrière de structure en H comportant, selon l'invention, une barre anti-roulis additionnelle,
- la figure 3 est une vue en perspective à échelle agrandie, montrant les fixations de la barre anti-roulis additionnelle sur l'un des bras de l'essieu,
- la figure 4 est une vue analogue à la figure 3, montrée sous un autre angle,
- la figure 5 est une vue en perspective partielle à échelle plus agrandie, montrant les fixations de la biellette de liaison entre la barre anti-roulis et le bras de l'essieu,
- la figure 6 est un schéma montrant les liaisons mécaniques de la barre anti-roulis additionnelle selon l'invention avec l'essieu,
- les figures 7 et 8 sont des schémas analogues à la figure 6, montrant des variantes concernant les liaisons mécaniques de la barre anti-roulis avec l'essieu.

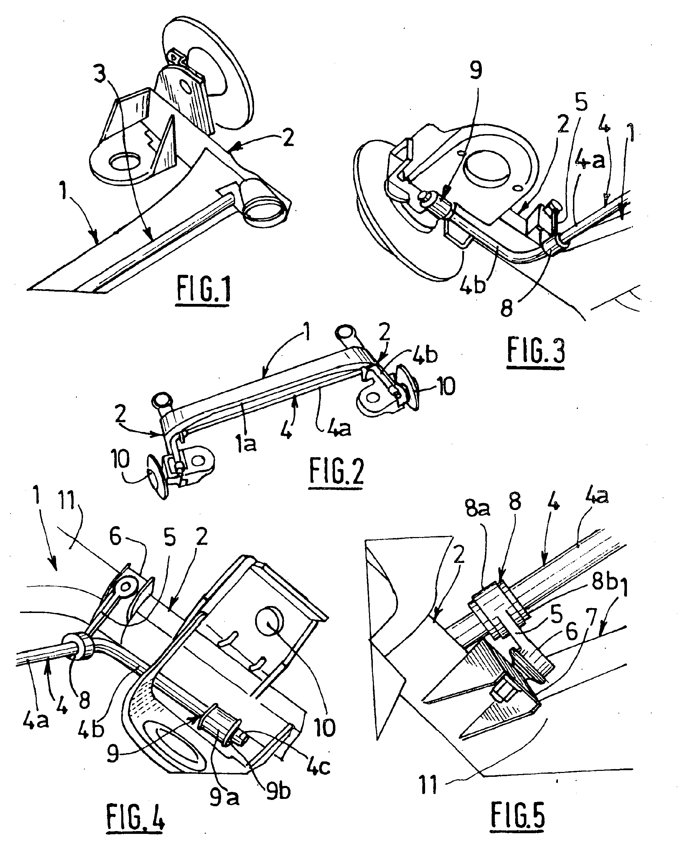

La figure 1 représente partiellement un essieu-arrière de véhicule automobile du type connu comprenant une traverse 1 portant à chacune de ses extrémités un bras rigide 2 destiné à être lié au châssis du véhicule. Les deux bras 2 forment avec la traverse 1 une structure en H. La traverse 1 est déformable en torsion et comporte une barre anti-roulis 3 s'étendant près de la traverse 1 dans le sens de sa longueur. Chacune des extrémités opposées de cette barre anti-roulis 3 est fixée par soudure à une extrémité de la traverse 1.

Comme montré par les figures 2 à 5, l'essieu-arrière selon l'invention comporte une seconde barre anti-roulis 4 comprenant une partie rectiligne 4a s'étendant parallèlement à la traverse 1 dont les extrémités sont reliées chacune à une partie 4b pliée de façon sensiblement perpendiculaire à la partie rectiligne 4a et dont l'extrémité est reliée à l'un des bras rigides 2. Chacune des extrémités de la partie rectiligne 4a de la seconde barre 4 est en outre reliée à l'un des bras rigides 2 par une biellette 5 (voir figures 3 à 5) dont l'extrémité opposée à la seconde barre 4 est reliée de façon articulée au bras rigide 2.

Dans l'exemple représenté, la biellette 5 est reliée au bras rigide 2 par une rotule 6 fixée à une équerre 7 soudée au bras 2 (voir notamment la figure 5).

Par ailleurs, la biellette 5 est reliée à la seconde barre 4 par une liaison annulaire 8 (voir figures 4 et 5).

Comme montré, notamment par les figures 3 et 4, chacune des extrémités 4c de la seconde barre 4 est reliée à l'un des bras 2 rigides par une liaison annulaire 9.

Les liaisons annulaires 8 et 9 comprennent chacune une bague 8a, 9a entourant annulairement la seconde barre 4, un manchon en élastomère 8b, 9b étant compris entre la bague 8a, 9a et la barre 4 (voir les figures 4 et 5).

Dans l'exemple représenté (voir figure 4), chacune des parties pliées 4b de la seconde barre 4 est reliée au bras rigide correspondant 2 en un point qui est situé sensiblement au droit du moyeu de roue 10 porté par le bras 2.

En outre, chaque biellette 5 est reliée au bras rigide 2 correspondant en un point situé près de la jonction 11 entre le bras rigide 2 et la traverse 4 (voir notamment les figures 4 et 5).

De plus, la figure 2 montre que la partie rectiligne 4a de la seconde barre 4 s'étend près du bord 1a de la traverse 1 adjacent aux moyeux des roues 10 portés par les bras rigides 2.

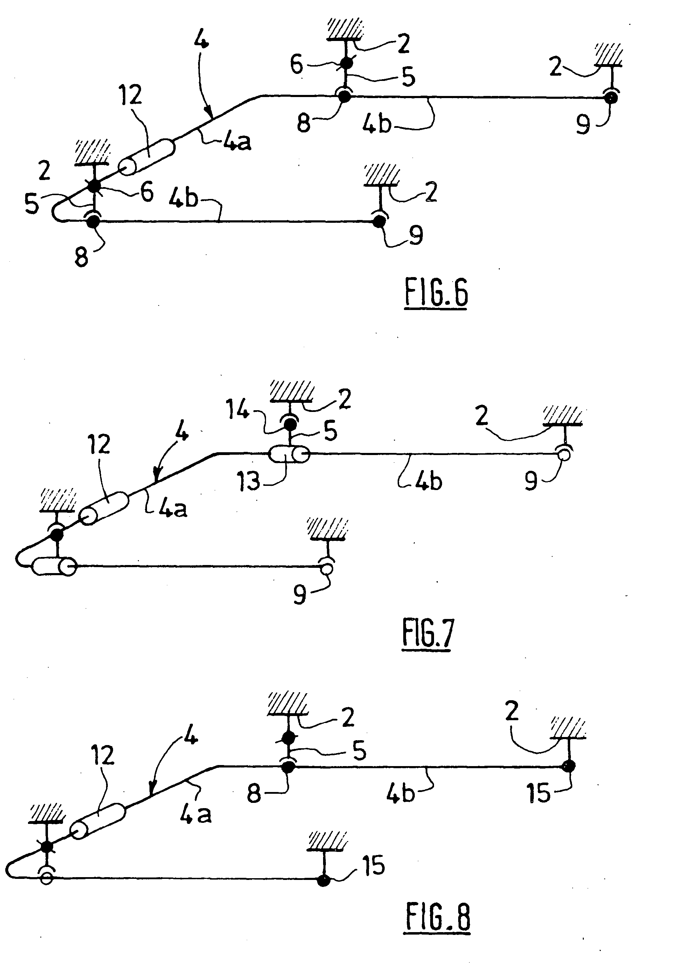

La figure 6 illustre schématiquement les liaisons cinématiques réalisées entre la barre anti-roulis additionnelle 4 et les bras rigides 5.

Les références 6 désignent la rotule reliant chaque biellette 5 au bras 2 correspondant.

Les références 8 et 9 désignent les liaisons annulaires réalisées entre chaque partie 4b de la barre 4 et le bras 2 correspondant.

La référence 12 désigne le fait que la partie 4a de la barre 4 peut se déformer en torsion.

Les schémas des figures 7 et 8 illustrent des variantes de l'invention.

Sur la figure 7, les références 13 désignent des zones des parties 4b de la barre 4 qui peuvent se déformer en torsion.

Chaque partie 4b de la barre 4 est reliée en 13 par une biellette 5 dont l'extrémité est reliée par une liaison annulaire 14 au bras 2 correspondant.

L'extrémité de chaque partie 4b de la barre 4 est reliée au bras 2 par une liaison annulaire 9, comme dans le cas de la figure 6.

Le schéma de la figure 8 diffère de celui de la figure 6 par le fait que l'extrémité de chaque partie 4b de la barre 4 est fixée au bras 2 correspondant par une liaison rigide 15.

De la description ci-dessus de l'invention, il résulte que la barre 4 anti-roulis additionnelle procure à l'essieu-arrière une raideur anti-roulis notablement accrue qui compense les limites de la première barre anti-roulis 3 représentée sur la figure 1.

En particulier, dans le cas de l'invention, la barre 4 anti-roulis peut présenter n'importe quelle section en fonction de la raideur souhaitée.

De plus, grâce à l'invention, on dispose d'une plus grande liberté en ce qui concerne la position de la barre anti-roulis 4 par rapport à l'essieu-arrière.

Par ailleurs, l'invention est applicable sur tous les essieu-arrières simples ainsi que les essieu-arrières à guidage transversal par barres Panhard ou par parallélogramme de Watt.

## Revendications

1. Essieu-arrière de véhicule automobile du type comprenant une traverse (1) portant à chacune de ses extrémités un bras rigide (2) destiné à être lié au châssis du véhicule, les deux bras (2) formant avec la traverse (1) une structure en H, la traverse (1) étant déformable en torsion et comportant une barre anti-roulis s'étendant près de la traverse dans le sens de sa longueur, chacune des extrémités opposées de cette barre anti-roulis étant fixée à une extrémité de la traverse (1), l'essieu-arrière étant **caractérisé en ce qu'**il comporte une barre anti-roulis (4) comprenant une partie rectiligne (4a) s'étendant parallèlement à la traverse (1) et dont les extrémités sont reliées chacune à une partie (4b) pliée de façon sensiblement perpendiculaire à ladite partie rectiligne (4a), l'extrémité libre (4c) de chaque partie pliée (4b) étant reliée à l'un desdits bras rigides (2), chacune des extrémités de ladite partie rectiligne (4a) de la barre (4) étant en outre reliée à l'un desdits bras rigides (2) par une biellette (5) dont l'extrémité opposée à la barre (4) est reliée de façon articulée audit bras rigide (2).

2. Essieu-arrière selon la revendication 1, **caractérisé en ce que** la biellette (5) est reliée audit bras rigide (2) par une rotule (6).

3. Essieu-arrière selon l'une des revendications 1 ou 2, **caractérisé en ce que** la biellette (5) est reliée à la barre (4) par une liaison annulaire (8).

4. Essieu-arrière selon l'une des revendications 1 à 3, **caractérisé en ce que** chacune des extrémités libres (4c) de la seconde barre (4) est reliée à l'un des bras (2) rigides par une liaison annulaire (9).

5. Essieu-arrière selon l'une des revendications 3 ou 4, **caractérisé en ce que** ladite liaison annulaire (8, 9) comprend une bague (8a, - 9a) entourant annulairement ladite barre (4), un fanchon en élastomère (8b, 9b) étant compris entre la bague (8a, 9a) et la barre (4).

6. Essieu-arrière selon l'une des revendications 1 à 5, **caractérisé en ce que** chacune des parties pliées (4b) de la seconde barre (4) est reliée au bras rigide (2) correspondant en un point qui est situé sensiblement au droit du moyeu de roue (10) porté par ledit bras (2).

7. Essieu-arrière selon l'une des revendications 1 à 6, **caractérisé en ce que** chaque biellette (5) est reliée au bras rigide (2) correspondant en un point situé près de la jonction (11) entre ledit bras rigide (2) et la traverse (1).

8. Essieu-arrière selon l'une des revendications 1 à 7, **caractérisé en ce que** la partie rectiligne (4a) de la barre (4) s'étend près du bord (1a) de la traverse (1) adjacent aux moyeux des roues (10) portés par les bras rigides (2).

## Claims

1. Motor vehicle rear axle of the type comprising a crossbeam (1) bearing, at each of its ends, a rigid arm (2) intended to be connected to the chassis of the vehicle, the two arms (2) with the crossbeam (1) forming an H-shaped structure, the crossbeam (1) being twistable and comprising an anti-roll bar running close to the crossbeam in the lengthwise direction thereof, each of the opposite ends of this anti-roll bar being fixed to one end of the crossbeam (1), the rear axle being **characterized in that** it comprises an anti-roll bar (4) comprising a straight part (4a) running parallel to the crossbeam (1) and the ends of which are each connected to a part (4b) bent substantially perpendicular to the said straight part (4a), the free end (4c) of each bent part (4b) being connected to one of the said rigid arms (2), each of the ends of the said straight part (4a) of the bar (4) also being connected to one of the said rigid arms (2) by a link (5) of which the opposite end to the bar (4) is articulated to the said rigid arm (2).

2. Rear axle according to Claim 1, **characterized in that** the link (5) is connected to the said rigid arm (2) by a ball joint (6).

3. Rear axle according to one of Claims 1 and 2, **characterized in that** the link (5) is connected to the bar (4) by an annular coupling (8).

4. Rear axle according to one of Claims 1 to 3, **characterized in that** each of the free ends (4c) of the second bar (4) is connected to one of the rigid arms (2) by an annular coupling (9).

5. Rear axle according to one of Claims 3 and 4, **characterized in that** the said annular coupling (8, 9) comprises a ring (8a, 9a) annularly surrounding the said bar (4), an elastomer sleeve (8b, 9b) being contained between the ring (8a, 9a) and the bar (4).

6. Rear axle according to one of Claims 1 to 5, **characterized in that** each of the bent parts (4b) of the second bar (4) is connected to the corresponding rigid arm (2) at a point located substantially in line with the wheel hub (10) carried by the said arm (2).

7. Rear axle according to one of Claims 1 to 6, **characterized in that** each link (5) is connected to the corresponding rigid arm (2) at a point situated near the junction (11) between the said rigid arm (2) and the crossbeam (1).

8. Rear axle according to one of Claims 1 to 7, **characterized in that** the straight part (4a) of the bar (4) runs close to that edge (1a) of the crossbeam (1) that is adjacent to the wheel hubs (10) carried by the rigid arms (2).

## Patentansprüche

1. Kraftfahrzeughinterachse der Art, die einen Querträger (1) umfasst, der an jedem seiner Enden einen starren Arm (2) trägt, der dazu bestimmt ist, mit dem Fahrgestell des Fahrzeugs verbunden zu werden, wobei die beiden Arme (2) mit dem Querträger (1) eine H-förmige Struktur bilden, der Querträger (1) torsionsweich ist und einen Stabilisator umfasst, der sich in der Nähe des Querträgers in dessen Längsrichtung erstreckt, wobei jedes der gegenüberliegenden Enden dieses Stabilisators an einem Ende des Querträgers (1) befestigt ist, **dadurch gekennzeichnet, dass** sie einen Stabilisator (4) umfasst, der einen geradlinigen Teil (4a) umfasst, der sich parallel zum Querträger (1) erstreckt und dessen Enden jeweils mit einem Teil (4b) verbunden sind, das im Wesentlichen senkrecht zum geradlinigen Teil (4a) gebogen ist, wobei das freie Ende (4c) jedes gebogenen Teils (4b) mit einem der starren Arme (2) verbunden ist, wobei jedes der Enden des geradlinigen Teils (4a) des Stabilisators (4) außerdem über einen Lenker (5), dessen dem Stabilisator (4) gegenüberliegendes Ende gelenkig mit dem starren Arm (2) verbunden ist, mit einem der starren Arme (2) verbunden ist.

2. Hinterachse nach Anspruch 1, **dadurch gekennzeichnet, dass** der Lenker (5) über ein Kugelgelenk (6) mit dem starren Arm (2) verbunden ist.

3. Hinterachse nach Anspruch 1 oder 2, **dadurch gekennzeichnet, dass** der Lenker (5) über eine ringförmige Verbindung (8) mit dem Stabilisator (4) verbunden ist.

4. Hinterachse nach einem der Ansprüche 1 bis 3, **dadurch gekennzeichnet, dass** jedes der freien Enden (4c) des zweiten Stabilisators (4) über eine ringförmige Verbindung (9) mit einem der starren Arme (2) verbunden ist.

5. Hinterachse nach Anspruch 3 oder 4, **dadurch gekennzeichnet, dass** die ringförmige Verbindung (8, 9) einen Ring (8a, 9a) umfasst, der den Stabilisator (4) ringförmig umgibt, wobei eine Elastomerhülse (8b, 9b) zwischen dem Ring (8a, 9a) und dem Stabilisator (4) liegt.

6. Hinterachse nach einem der Ansprüche 1 bis 5, **dadurch gekennzeichnet, dass** die gebogenen Teile (4b) des zweiten Stabilisators (4) jeweils an einem Punkt mit dem entsprechenden starren Arm (2) verbunden sind, der sich im Wesentlichen gegenüber der vom Arm (2) getragenen Radnabe (10) befindet.

7. Hinterachse nach einem der Ansprüche 1 bis 6, **dadurch gekennzeichnet, dass** jeder Lenker (5) an einem Punkt mit dem entsprechenden starren Arm (2) verbunden ist, der in der Nähe des Übergangs (11) vom starren Arm (2) zum Querträger (1) liegt.

8. Hinterachse nach einem der Ansprüche 1 bis 7, **dadurch gekennzeichnet, dass** sich der geradlinige Teil (4a) des Stabilisators (4) nahe am Rand (1a) des Querträgers (1) erstreckt, der den von den starren Armen (2) getragenen Radnaben (10) benachbart ist.
